# EUROPEAN PATENT APPLICATION

(11) **EP 4 685 047 A1**
(43) Date of publication of application: **28.01.2026**
(21) Application number: 25187676.9
(22) Date of filing: 04.07.2025
(51) Int. Cl.: B63H 21/20, B63H 23/30

(54) **MARINE PROPULSION DEVICE**

(30) Priority: 24.07.2024 JP 2024118467
(71) Applicant: Suzuki Motor Corporation, Shizuoka 432-8611 (JP)
(72) Inventor: MIYASHITA, Yasushi, Hamamatsu-shi (JP)
(74) Representative: Haseltine Lake Kempner LLP

(57) **Abstract**

A marine propulsion device (1) includes: a propeller (2, 3); a first power source (6) for rotating the propeller; a second power source (8) for rotating the propeller; a propeller shaft (4, 5) provided with the propeller; a first drive shaft(13) connected to the first power source; a second drive shaft (14) connected to the second power source; a transmission shaft (16) connected to the propeller shaft; and a dog clutch (40, 85) that switches a connection mode of the first drive shaft, the second drive shaft, and the transmission shaft between at least two of: a first mode in which the first drive shaft and the transmission shaft are connected to each other; a second mode in which the second drive shaft and the transmission shaft are connected to each other; and a third mode in which both the first drive shaft and the second drive shaft are connected to the transmission shaft.

## Description

### TECHNICAL FIELD

The present invention relates to a marine propulsion device including two power sources for rotating a propeller.

### BACKGROUND ART

One mode of marine propulsion device including two power sources to rotate a propeller is a hybrid marine propulsion device that includes an engine and a motor and generates thrust for a boat by rotating the propeller using power of the engine and power of the motor.

JP2007-8329A (Patent Literature 1) describes a hybrid outboard motor. The outboard motor described in the publication includes an engine, a motor, a driving force adjustment unit, and a drive shaft that transmits power output from the driving force adjustment unit to a propeller shaft. The driving force adjustment unit includes a differential gear device that combines power of the engine and power of the motor, and a centrifugal clutch that transmits the power of the engine to the differential gear device when a rotation speed of the engine is equal to or higher than a set value, and does not transmit the power of the engine to the differential gear device when the rotation speed of the engine is lower than the set value. The rotation speeds of the engine and the motor increases and decreases according to an amount of operation of a throttle grip of a steering wheel. When the rotation speed of the engine is not equal to or higher than the set value, only the power of the motor is output to the drive shaft via the differential gear device. As a result, a propeller is rotated only by the power of the motor. Meanwhile, when the rotation speed of the engine is equal to or higher than the set value, the power of the engine and the power of the motor are combined by the differential gear device and output to the drive shaft. As a result, the propeller is rotated by both the power of the engine and the power of the motor. According to the outboard motor described in the publication, the boat can be moved at a very low speed during trolling by generating thrust using only the power of the motor. When the boat is moving at a high speed, thrust is generated using both the power of the engine and the power of the motor so that it is possible to reduce fuel consumption of the engine.

### CITATION LIST

### PATENT LITERATURE

Patent Literature 1: JP2007-8329A

The outboard motor of the above-described publication uses the differential gear device as a device for combining the power of the engine and the power of the motor and outputting the combined power to the drive shaft. In general, a differential gear device has a complex structure and is difficult to miniaturize. Therefore, when preventing an increase in a size of the marine propulsion device is considered, it is difficult to provide the marine propulsion device with the differential gear device.

The outboard motor in the above-described publication uses the centrifugal clutch as a device for switching between a mode of generating thrust only by the power of the motor and a mode of generating thrust by both the power of the engine and the power of the motor. Generally, a size of the centrifugal clutch increases as torque capacity increases. Therefore, when a high-power engine is mounted on the marine propulsion device, the centrifugal clutch becomes large so that it is difficult to secure a space for the centrifugal clutch in the marine propulsion device.

### SUMMARY

The present invention is made considering, for example, the problem described above, and an object of the present invention is to provide a marine propulsion device including two power sources for rotating a propeller, in which a structure for transmitting power of the two power sources to the propeller is simplified and made compact.

To solve the above problem, the present invention provides a marine propulsion device including: a propeller; a first power source for rotating the propeller; a second power source for rotating the propeller; a propeller shaft provided with the propeller; a first drive shaft connected to the first power source; a second drive shaft connected to the second power source; a transmission shaft connected to the propeller shaft; and a dog clutch that switches a connection mode of the first drive shaft, the second drive shaft, and the transmission shaft between at least two of a first mode in which the first drive shaft and the transmission shaft are connected to each other, a second mode in which the second drive shaft and the transmission shaft are connected to each other, and a third mode in which both the first drive shaft and the second drive shaft are connected to the transmission shaft.

According to the present invention, in a marine propulsion device including two power sources for rotating a propeller, a structure for transmitting power of the two power sources to the propeller can be simplified and made compact.

### BRIEF DESCRIPTION OF DRAWINGS

FIG. 1 is an explanatory diagram illustrating a configuration of a marine propulsion device according to a first example of the present invention.
FIG. 2 is an enlarged cross-sectional view of a power switching mechanism in the marine propulsion device in FIG. 1 when a dog clutch is moved upward.
FIG. 3 is an enlarged cross-sectional view of the power switching mechanism in the marine propulsion device in FIG. 1 when the dog clutch is moved downward.
FIG. 4 is a cross-sectional view illustrating main components of the power switching mechanism in FIG. 2.
FIG. 5 is a cross-sectional view illustrating the power switching mechanism taken along a direction of an arrow V-V in FIG. 2 as viewed from the front.
FIGS. 6A to 6C are explanatory diagrams illustrating a power switching mechanism in a marine propulsion device according to a second example of the present invention.

### DESCRIPTION OF EMBODIMENTS

A marine propulsion device according to an embodiment of the present invention includes a propeller, a first power source for rotating the propeller, a second power source for rotating the propeller, a propeller shaft provided with the propeller, a first drive shaft connected to the first power source, a second drive shaft connected to the second power source, a transmission shaft connected to the propeller shaft, and a dog clutch that switches a connection mode of the first drive shaft, the second drive shaft, and the transmission shaft.

The dog clutch switches the connection mode of the first drive shaft, the second drive shaft, and the transmission shaft between at least two of a first mode in which the first drive shaft and the transmission shaft are connected to each other, a second mode in which the second drive shaft and the transmission shaft are connected to each other, and a third mode in which both the first drive shaft and the second drive shaft are connected to the transmission shaft.

In the marine propulsion device of the embodiment, when the dog clutch switches the connection mode of the first drive shaft, the second drive shaft, and the transmission shaft to the above-described first mode, only power of the first power source of the first power source and the second power source is transmitted to the propeller shaft, and the propeller is rotated only by the power of the first power source. When the dog clutch switches the connection mode of the first drive shaft, the second drive shaft, and the transmission shaft to the above-described second mode, only power of the second power source of the first power source and the second power source is transmitted to the propeller shaft, and the propeller is rotated only by the power of the second power source. When the dog clutch switches the connection mode of the first drive shaft, the second drive shaft, and the transmission shaft to the above-described third mode, both the power of the first power source and the power of the second power source are transmitted to the propeller shaft, and the propeller is rotated by the power of the first power source and the power of the second power source. As such, according to the marine propulsion device of the embodiment, the power source that rotates the propeller can be switched by the dog clutch, thereby realizing a function equivalent to that of the centrifugal clutch in the above-described marine propulsion device of the related art. The centrifugal clutch includes weights for switching between engagement and disengagement of the clutch by centrifugal force. For such structural reasons, a size of the centrifugal clutch increases as torque capacity increases. In contrast, the dog clutch does not require such weights, and therefore, structurally, compared to the centrifugal clutch, it is easy to reduce an increase in size that accompanies an increase in torque capacity.

In the marine propulsion device of the embodiment, when the dog clutch switches the connection mode of the first drive shaft, the second drive shaft, and the transmission shaft to the above-described third mode, the power of the first power source and the power of the second power source are transmitted to the propeller shaft, and the propeller is rotated by the power of the first power source and the power of the second power source. As such, according to the marine propulsion device of the embodiment, the dog clutch can combine the power of the first power source and the power of the second power source and output the combined power to the propeller shaft, thereby realizing a function equivalent to that of the differential gear device in the above-described marine propulsion device of the related art. The differential gear device has a complex structure including a large number of mechanical elements (gears and the like) so that it is difficult to reduce a size of the differential gear device. In contrast, the dog clutch can be configured of a smaller number of mechanical elements than the differential gear device so that it is easier to simplify the structure and reduce the size compared to the differential gear device.

As such, in the marine propulsion device of the embodiment, the power source that rotates the propeller can be switched using the dog clutch that prevents an increase in size more easily than the centrifugal clutch, and the power of the two power sources can be combined using the dog clutch that simplifies the structure and is made compact more easily than the differential gear device. Therefore, according to the marine propulsion device of the embodiment, the structure for transmitting the power of the two power sources to the propellers can be simplified and made compact.

### [First Example]

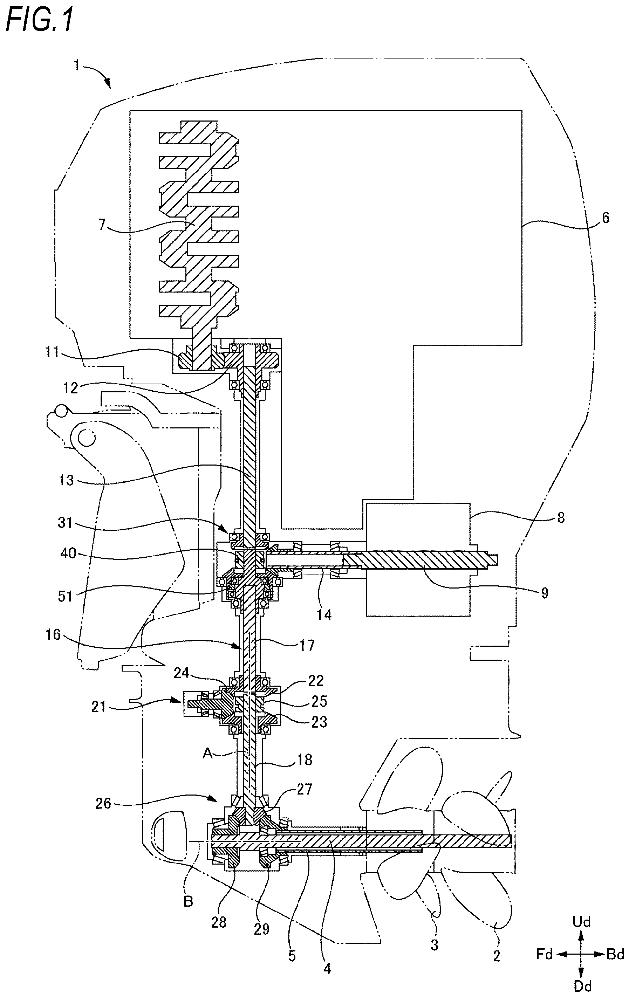

Two examples of the present invention will be described with reference to the drawings. In the description of each embodiment, directions of up (Ud), down (Dd), front (Fd), back (Bd), left (Ld), and right (Rd) follow arrows drawn at the bottom right in FIGS. 1 to 3, 5, and 6A to 6C.

### Marine Propulsion Device

FIG. 1 illustrates a marine propulsion device 1 according to a first example of the present invention. The marine propulsion device 1 is a device that generates thrust for a boat. The marine propulsion device 1 of the example is an outboard motor, and is mounted on the boat.

As illustrated in FIG. 1, the marine propulsion device 1 employs contra-rotating propellers. The marine propulsion device 1 includes two propellers 2 and 3, a propeller shaft 4 provided with the propeller 2, and a propeller shaft 5 provided with the propeller 3. The propellers 2 and 3 and the propeller shafts 4 and 5 are disposed at a lower part of the marine propulsion device 1 and are positioned below the water surface when the marine propulsion device 1 is mounted on the boat. The propeller shafts 4 and 5 each extend in a front-rear direction. The propeller shafts 4 and 5 are disposed coaxially with each other. The propeller shaft 5 is formed in a cylindrical shape, and the propeller shaft 4 is inserted into the propeller shaft 5. The propeller shafts 4 and 5 can rotate independently of each other. The propellers 2 and 3 are arranged in the front-rear direction. The propeller 2 on a rear side is fixed to a rear end of the propeller shaft 4 and rotates integrally with the propeller shaft 4. The propeller 3 on a front side is fixed to a rear end of the propeller shaft 5 and rotates integrally with the propeller shaft 5.

The marine propulsion device 1 includes an engine (internal combustion engine) 6 as a first power source for rotating both of the propellers 2 and 3, a motor (electric motor) 8 as a second power source for rotating both of the propellers 2 and 3, an engine drive shaft 13 connected to the engine 6, a motor drive shaft 14 connected to the motor 8, and a transmission shaft 16 connected to the propeller shafts 4 and 5. The transmission shaft 16 is divided into an upper transmission shaft 17 and a lower transmission shaft 18. The engine drive shaft 13 is a specific example of a "first drive shaft", and the motor drive shaft 14 is a specific example of a "second drive shaft".

The marine propulsion device 1 includes a power switching mechanism 31 that switches the power source that rotates the propellers 2 and 3, a rotation direction switching mechanism 21 that switches a rotation direction of the propellers 2 and 3, and a rotation transmission mechanism 26 that transmits rotation of the lower transmission shaft 18 to the two propeller shafts 4 and 5.

The engine 6 and the motor 8 are disposed in an upper part of the marine propulsion device 1 and are positioned above the water surface when the marine propulsion device 1 is mounted on the boat. The engine 6 is disposed so that an extension direction of a crankshaft 7 is a vertical direction. The engine 6 is disposed so that a portion of the engine 6 where the crankshaft 7 is provided is positioned at a front side of the marine propulsion device 1. The engine drive shaft 13 extends in the vertical direction. The crankshaft 7 is connected to an upper end of the engine drive shaft 13 via an engine drive gear 11 and an engine driven gear 12. As a result, rotation of the crankshaft 7 is transmitted to the engine drive shaft 13.

The motor 8 is disposed on the lower rear of the engine 6 so that an extension direction of an output shaft 9 (extension direction of a rotation axis of a rotor) is the front-rear direction. The motor drive shaft 14 extends in the front-rear direction. A rear end of the motor drive shaft 14 is connected to the output shaft 9 of the motor 8. A motor drive gear 15 is provided in a front end of the motor drive shaft 14. The motor drive gear 15 is a bevel gear. The motor drive gear 15 is fixed to a front end of the motor drive shaft 14 to not be rotatable relative to the motor drive shaft 14. The motor drive shaft 14 and the motor drive gear 15 rotate integrally with the output shaft 9. The motor drive gear 15 is a specific example of a "second gear".

The power switching mechanism 31 is disposed below the engine drive shaft 13 and in front of the motor drive shaft 14. The power switching mechanism 31 includes a dog clutch 40 and a one-way clutch 51. In the power switching mechanism 31, when the dog clutch 40 moves upward, the engine drive shaft 13 and the upper transmission shaft 17 are connected to each other via the dog clutch 40, and rotation of the engine drive shaft 13 is transmitted to the upper transmission shaft 17 via the dog clutch 40. Meanwhile, when the dog clutch 40 moves downward, the motor drive shaft 14 and the upper transmission shaft 17 are connected to each other via the dog clutch 40, and rotation of the motor drive shaft 14 is transmitted to the upper transmission shaft 17 via the dog clutch 40. When the dog clutch 40 moves upward and a rotation speed of a transmission gear 45 in a predetermined direction described below is higher than a rotation speed of the upper transmission shaft 17 in the predetermined direction, the rotation of the motor drive shaft 14 is transmitted to the upper transmission shaft 17 via the one-way clutch 51. The power switching mechanism 31 will be described in detail below.

Each of the upper transmission shaft 17 and the lower transmission shaft 18 extends in the vertical direction and is disposed coaxially with the engine drive shaft 13. An upper end of the upper transmission shaft 17 is connected to an output side of the power switching mechanism 31. The lower transmission shaft 18 is disposed below the upper transmission shaft 17. The rotation direction switching mechanism 21 is disposed between the upper transmission shaft 17 and the lower transmission shaft 18.

The rotation direction switching mechanism 21 includes three gears 22, 23, and 24 and a rotation direction switching clutch 25. The gears 22, 23, and 24 are all bevel gears. The gear 22 is provided in a lower end of the upper transmission shaft 17. The gear 22 is fixed to the upper transmission shaft 17 and rotates integrally with the upper transmission shaft 17. The gear 23 is provided in an outer periphery of an upper part of the lower transmission shaft 18. The gear 23 is not fixed to the lower transmission shaft 18. The lower transmission shaft 18 passes through a hole provided in a center of the gear 23, and an outer circumferential surface of the lower transmission shaft 18 is not in contact with an inner circumferential surface of the hole of the gear 23. Therefore, the gear 23 can rotate relative to the lower transmission shaft 18. The gear 24 meshes with each of the gear 22 and the gear 23. Rotation of the gear 22 is transmitted to the gear 23 via the gear 24. Both the gear 22 and the gear 23 rotate about an axis A in FIG. 1, but due to a meshing structure of the gears 22, 23, and 24, a rotation direction of the gear 22 and a rotation direction of the gear 23 are opposite to each other. The rotation direction switching clutch 25 is structurally a dog clutch. The rotation direction switching clutch 25 is provided in an upper end of the lower transmission shaft 18 to not be rotatable relative to the lower transmission shaft 18 and to be movable in the vertical direction relative to the lower transmission shaft 18. When the rotation direction switching clutch 25 moves upward, the gear 22 and the lower transmission shaft 18 are connected to each other via the rotation direction switching clutch 25. As a result, rotation of the gear 22, that is, rotation of the upper transmission shaft 17 is transmitted to the lower transmission shaft 18 only via the rotation direction switching clutch 25 so that a rotation direction of the lower transmission shaft 18 is the same as a rotation direction of the upper transmission shaft 17. Meanwhile, when the rotation direction switching clutch 25 moves downward, the gear 23 and the lower transmission shaft 18 are connected to each other via the rotation direction switching clutch 25. As a result, the rotation of the gear 22, that is, the rotation of the upper transmission shaft 17 is transmitted to the lower transmission shaft 18 via the gear 24, the gear 23, and the rotation direction switching clutch 25 so that the rotation direction of the lower transmission shaft 18 is opposite to the rotation direction of the upper transmission shaft 17. As such, according to the rotation direction switching mechanism 21, the rotation direction of the lower transmission shaft 18 can be switched relative to the rotation direction of the upper transmission shaft 17 by moving the rotation direction switching clutch 25. Since the rotation direction of each of the propellers 2 and 3 is determined by the rotation direction of the lower transmission shaft 18, the rotation direction of each of the propellers 2 and 3 can be switched by switching the rotation direction of the lower transmission shaft 18. By switching the rotation direction of each of the propellers 2 and 3, the boat can be switched between forward movement and reverse movement.

The rotation transmission mechanism 26 is disposed below the lower transmission shaft 18. The rotation transmission mechanism 26 includes a gear 27, a gear 28, and a gear 29. The gears 27, 28, and 29 are all bevel gears. The gear 27 is fixed to a lower end of the lower transmission shaft 18 and rotates integrally with the lower transmission shaft 18. The gear 28 is fixed to a front end of the propeller shaft 4 and rotates integrally with the propeller shaft 4. The gear 29 is fixed to a front end of the propeller shaft 5 and rotates integrally with the propeller shaft 5. The gear 28 is disposed in front of the gear 27, and the gear 29 is disposed behind the gear 27. The gear 28 and the gear 29 each mesh with the gear 27 and rotation of the gear 27 is transmitted to each of the gear 28 and the gear 29. Both the gear 28 and the gear 29 rotate about an axis B in FIG. 1, but due to a meshing structure of the gears 27, 28, and 29, a rotation direction of the gear 28 and a rotation direction of the gear 29 are opposite to each other. As a result, when the gear 27, that is, the lower transmission shaft 18 rotates, the propeller shaft 4 and the propeller shaft 5 rotate in opposite directions to each other so that the two propellers 2 and 3 configuring the contra-rotating propellers rotate in opposite directions to each other.

### Configuration of Power Switching Mechanism

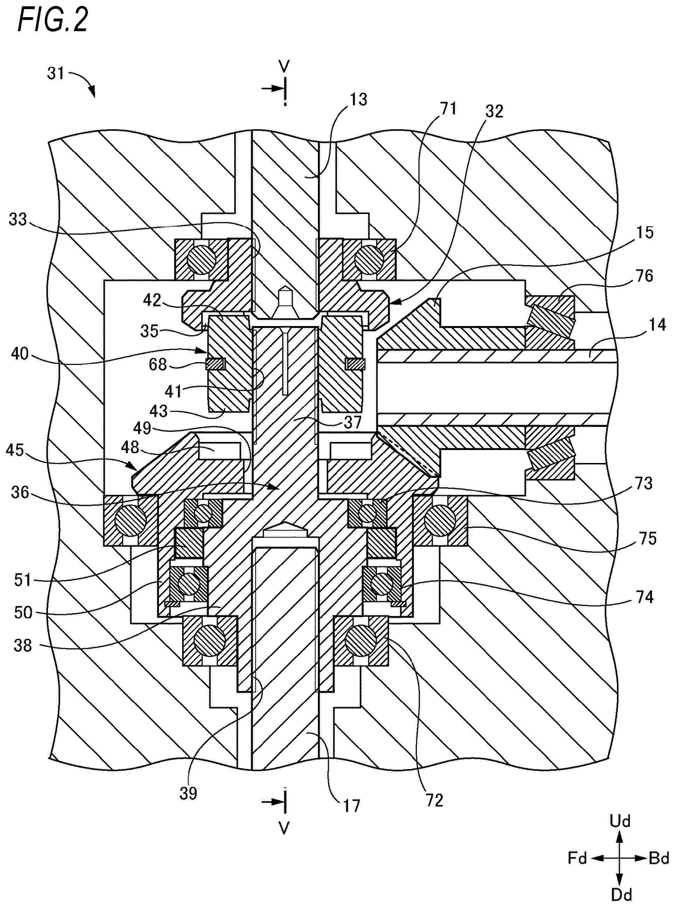

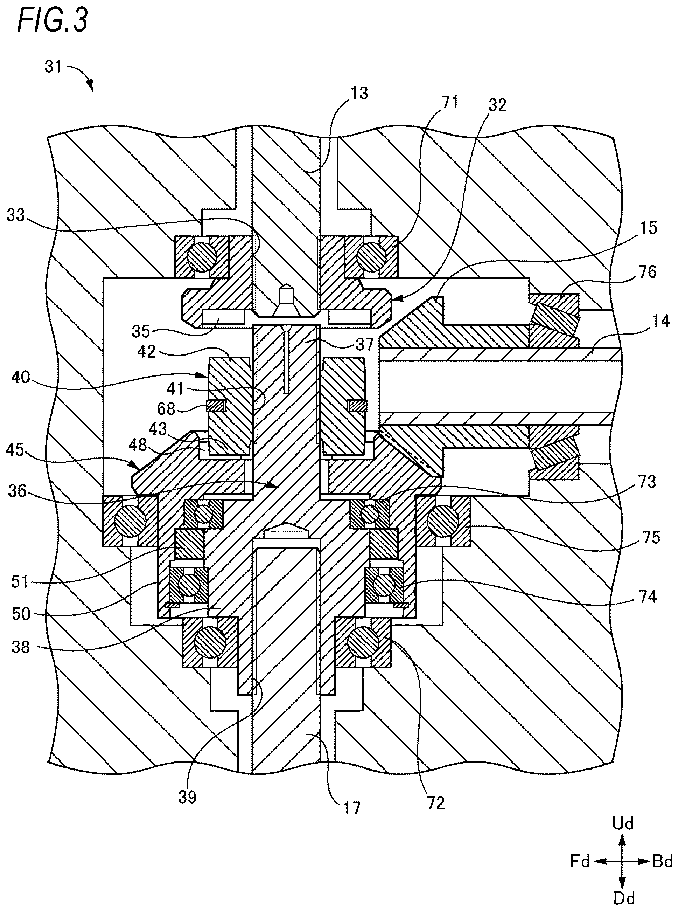

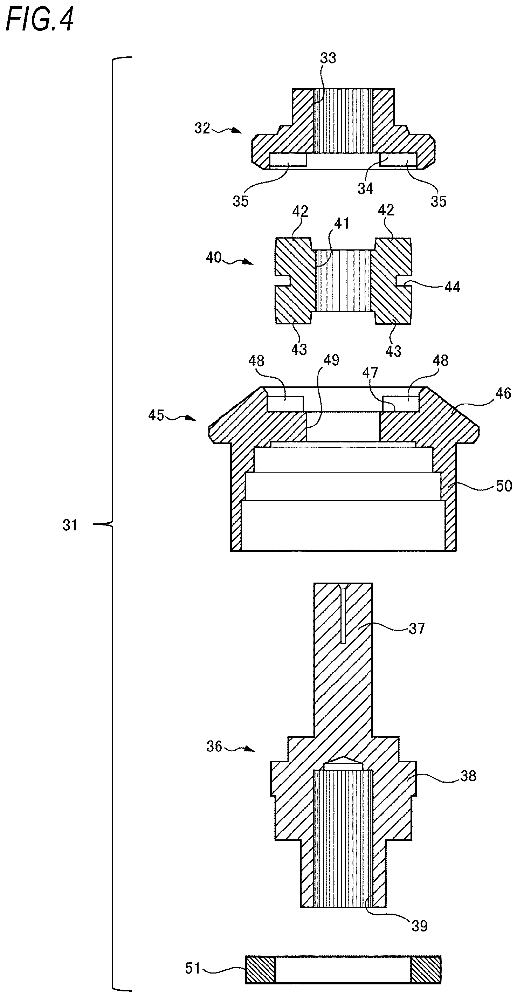

FIG. 2 illustrates the power switching mechanism 31 when the dog clutch 40 is moved upward. FIG. 3 illustrates the power switching mechanism 31 when the dog clutch 40 is moved downward. FIG. 4 illustrates main components of the power switching mechanism 31 separated from one another.

As illustrated in FIGS. 2 and 4, the power switching mechanism 31 includes an engaging member 32, a clutch shaft 36, the dog clutch 40, the transmission gear 45, and the one-way clutch 51. The transmission gear 45 is a specific example of a "first gear".

As illustrated in FIG. 4, an outer shape of the engaging member 32 is cylinder-like, and a coupling hole 33 is formed in a center of the engaging member 32. A recess portion 34 is formed on an inner circumferential portion of a lower surface of the engaging member 32, and a plurality of engaging portions 35 are formed on a bottom surface of the recess portion 34. The engaging portions 35 are, for example, teeth protruding downward from the bottom surface of the recess portion 34. As illustrated in FIG. 2, the engaging member 32 is attached to a lower end of the engine drive shaft 13 by inserting the lower end of the engine drive shaft 13 into the coupling hole 33. The engaging member 32 and the engine drive shaft 13 are splined to each other. The engaging member 32 is not rotatable relative to the engine drive shaft 13 and rotates integrally with the engine drive shaft 13. The lower end of the engine drive shaft 13 to which the engaging member 32 is attached is supported by a body of the marine propulsion device 1 via a bearing 71 to be rotatable relative to the body.

As illustrated in FIG. 4, the clutch shaft 36 is a shaft that extends in the vertical direction. In a lower part of the clutch shaft 36, an enlarged diameter portion 38 is formed to have an enlarged diameter compared to that of an upper part 37 of the clutch shaft 36. A coupling hole 39 is formed in a lower end of the clutch shaft 36. As illustrated in FIG. 2, the clutch shaft 36 is attached to the upper end of the upper transmission shaft 17 by inserting the upper end of the upper transmission shaft 17 into the coupling hole 39. The clutch shaft 36 and the upper transmission shaft 17 are splined to each other. The clutch shaft 36 is not rotatable relative to the upper transmission shaft 17 and rotates integrally with the upper transmission shaft 17. The upper end of the upper transmission shaft 17 to which the clutch shaft 36 is attached is supported by the body of the marine propulsion device 1 via a bearing 72 to be rotatable relative to the body.

As illustrated in FIG. 4, an outer shape of the dog clutch 40 is cylinder-like, and an insertion hole 41 is formed in a center of the dog clutch 40. A plurality of upper engaging portions 42 are formed on an upper surface of the dog clutch 40. The upper engaging portions 42 are, for example, teeth protruding upward from the upper surface of the dog clutch 40. A plurality of lower engaging portions 43 are formed on a lower surface of the dog clutch 40. The lower engaging portions 43 are, for example, teeth protruding downward from the lower surface of the dog clutch 40. A fork mounting groove 44 is formed on an outer circumferential surface of the dog clutch 40. The fork mounting groove 44 extends around an entire circumference of the dog clutch 40. As illustrated in FIG. 2, the dog clutch 40 is disposed below the engine drive shaft 13, specifically, below the engaging member 32. The dog clutch 40 is attached to the upper part 37 of the clutch shaft 36 by inserting the upper part 37 of the clutch shaft 36 into the insertion hole 41. The dog clutch 40 is attached to the upper part 37 of the clutch shaft 36 to not be rotatable relative to the clutch shaft 36 and to be movable in the vertical direction relative to the clutch shaft 36. For example, splines are formed on an inner circumferential surface of the insertion hole 41 of the dog clutch 40 and on an outer circumferential surface of the upper part 37 of the clutch shaft 36, and by meshing the splines with each other, the dog clutch 40 is not rotatable relative to the clutch shaft 36 and is movable in the vertical direction relative to the clutch shaft 36.

As illustrated in FIG. 4, the transmission gear 45 is a bevel gear. The transmission gear 45 includes a teeth portion 46 and a boss portion 50. The teeth portion 46 is formed in a truncated cone shape, and teeth are formed on an outer circumferential surface of the teeth portion 46. A recess portion 47 is formed on an inner circumferential portion of an upper surface of the teeth portion 46, and a plurality of engaging portions 48 are formed on a lower surface of the recess portion 47. The engaging portions 48 are, for example, teeth protruding upward from the lower surface of the recess portion 47. An insertion hole 49 is formed in a center of the teeth portion 46. The boss portion 50 is formed in a cylindrical shape and extends downward from the teeth portion 46.

As illustrated in FIG. 2, the transmission gear 45 is disposed on an outer circumferential side of the upper part 37 of the clutch shaft 36 and below the dog clutch 40. The transmission gear 45 is provided to be rotatable relative to the clutch shaft 36. That is, the upper part 37 of the clutch shaft 36 is inserted into the insertion hole 49 of the teeth portion 46 of the transmission gear 45. A diameter of the insertion hole 49 is larger than an outer diameter of the upper part 37 of the clutch shaft 36, and an outer circumferential surface of the upper part 37 of the clutch shaft 36 is not in contact with an inner circumferential surface of the insertion hole 49. The enlarged diameter portion 38 of the clutch shaft 36 is inserted into the boss portion 50 of the transmission gear 45. An inner diameter of the boss portion 50 having a cylindrical shape is larger than an outer diameter of the enlarged diameter portion 38 of the clutch shaft 36, and an outer circumferential surface of the enlarged diameter portion 38 of the clutch shaft 36 is not in contact with an inner circumferential surface of the boss portion 50. Bearings 73 and 74 are provided between the boss portion 50 of the transmission gear 45 and the enlarged diameter portion 38 of the clutch shaft 36, and the transmission gear 45 is supported by the clutch shaft 36 via the bearings 73 and 74 to be rotatable relative to the clutch shaft 36. A bearing 75 is provided between the boss portion 50 of the transmission gear 45 and the body of the marine propulsion device 1, and the transmission gear 45 is supported by the body of the marine propulsion device 1 via the bearing 75 to be rotatable relative to the body.

The motor drive gear 15 mounted on the front end of the motor drive shaft 14 is disposed behind the transmission gear 45, and the transmission gear 45 and the motor drive gear 15 mesh with each other. The front end of the motor drive shaft 14 on which the motor drive gear 15 is mounted is supported by the body of the marine propulsion device 1 via a bearing 76 to be rotatable relative to the body.

The one-way clutch 51 is formed overall in a cylindrical shape or a disk shape having a hole in a center. The one-way clutch 51 is disposed between the boss portion 50 of the transmission gear 45 and the enlarged diameter portion 38 of the clutch shaft 36. Specifically, the one-way clutch 51 is disposed in the boss portion 50 of the transmission gear 45, and the enlarged diameter portion 38 of the clutch shaft 36 is disposed on the inner circumferential side of the one-way clutch 51.

### Function and Operation of Power Switching Mechanism

The power switching mechanism 31 has a function of switching the power source that rotates the propellers 2 and 3 between the engine 6 as the first power source and the motor 8 as the second power source. The function of the power switching mechanism 31 is realized by combining a function of the dog clutch 40 and a function of the one-way clutch 51.

First, the function and the operation of the dog clutch 40 will be described. The dog clutch 40 switches a connection mode of the engine drive shaft 13, the motor drive shaft 14, and the upper transmission shaft 17 between a mode in which the engine drive shaft 13 and the upper transmission shaft 17 are connected to each other and a mode in which the motor drive shaft 14 and the upper transmission shaft 17 are connected to each other.

Specifically, as illustrated in FIG. 2, when the dog clutch 40 moves upward, the engaging portion 35 of the engaging member 32 attached to the lower end of the engine drive shaft 13 and the upper engaging portion 42 of the dog clutch 40 engage with each other. As a result, the engine drive shaft 13 and the upper transmission shaft 17 are connected to each other via the engaging member 32, the dog clutch 40, and the clutch shaft 36. When the dog clutch 40 moves upward, the engaging portion 48 of the transmission gear 45 and the lower engaging portion 43 of the dog clutch 40 are separated from each other. As a result, the connection between the motor drive shaft 14 and the upper transmission shaft 17 via the motor drive gear 15, the transmission gear 45, the dog clutch 40, and the clutch shaft 36 is released. Therefore, when the dog clutch 40 moves upward, the rotation of the engine drive shaft 13 is transmitted to the upper transmission shaft 17 via the dog clutch 40, and at the same time, the rotation of the motor drive shaft 14 is no longer transmitted to the upper transmission shaft 17 via the dog clutch 40.

Meanwhile, as illustrated in FIG. 3, when the dog clutch 40 moves downward, the engaging portion 35 of the engaging member 32 and the upper engaging portion 42 of the dog clutch 40 are separated from each other. As a result, the connection between the engine drive shaft 13 and the upper transmission shaft 17 via the engaging member 32, the dog clutch 40, and the clutch shaft 36 is released. When the dog clutch 40 moves downward, the engaging portion 48 of the transmission gear 45 and the lower engaging portion 43 of the dog clutch 40 engage with each other. As a result, the motor drive shaft 14 and the upper transmission shaft 17 are connected to each other via the motor drive gear 15, the transmission gear 45, the dog clutch 40 and the clutch shaft 36. Therefore, when the dog clutch 40 moves downward, the rotation of the engine drive shaft 13 is no longer transmitted to the upper transmission shaft 17 via the dog clutch 40, and at the same time, the rotation of the motor drive shaft 14 is transmitted to the upper transmission shaft 17 via the dog clutch 40.

Next, the function and the operation of the one-way clutch 51 will be described. The one-way clutch 51 transmits rotation of the transmission gear 45 to the upper transmission shaft 17 only when a rotation speed of the transmission gear 45 in a predetermined direction is higher than a rotation speed of the upper transmission shaft 17 in the predetermined direction. For example, while the upper transmission shaft 17 rotates in the above-described predetermined direction, the motor drive shaft 14 rotates and the rotation of the motor drive shaft 14 is transmitted to the transmission gear 45 so that the transmission gear 45 rotates in the above-described predetermined direction, and when the rotation speed of the transmission gear 45 is higher than the rotation speed of the upper transmission shaft 17, the rotation of the motor drive shaft 14 is transmitted to the upper transmission shaft 17 via the motor drive gear 15, the transmission gear 45, the one-way clutch 51, and the clutch shaft 36. Meanwhile, while the upper transmission shaft 17 rotates in the above-described predetermined direction, the motor drive shaft 14 rotates and the rotation of the motor drive shaft 14 is transmitted to the transmission gear 45 so that the transmission gear 45 rotates in the above-described predetermined direction, and when the rotation speed of the transmission gear 45 is equal to or less than the rotation speed of the upper transmission shaft 17, the rotation of the motor drive shaft 14 is not transmitted to the upper transmission shaft 17 via the motor drive gear 15, the transmission gear 45, the one-way clutch 51, and the clutch shaft 36. The above-described predetermined direction is a direction in which the upper transmission shaft 17 rotates when the rotation of the crankshaft 7 of the engine 6 is transmitted to the upper transmission shaft 17.

In the power switching mechanism 31, the one-way clutch 51 operates only when the dog clutch 40 moves upward and the transmission gear 45 is not connected to the upper transmission shaft 17 via the dog clutch 40 and the clutch shaft 36 as illustrated in FIG. 2. That is, as illustrated in FIG. 3, when the dog clutch 40 moves downward and the transmission gear 45 is connected to the upper transmission shaft 17 via the dog clutch 40 and the clutch shaft 36, the one-way clutch 51 does not operate. That is, when the dog clutch 40 moves downward, the transmission gear 45 and the upper transmission shaft 17 are coupled by the dog clutch 40 and rotate together so that the transmission gear 45 no longer rotates relative to the upper transmission shaft 17. Therefore, the one-way clutch 51 does not function.

The function of the dog clutch 40 and the function of the one-way clutch 51 described above are combined to be the function of the power switching mechanism 31. That is, the power switching mechanism 31 transmits only the rotation of the engine drive shaft 13 to the upper transmission shaft 17 when the dog clutch 40 moves upward and the rotation speed of the transmission gear 45 in the above-described predetermined direction is equal to or less than the rotation speed of the upper transmission shaft 17 in the above-described predetermined direction. As a result, the engine 6 is the only power source that rotates the propellers 2 and 3. The power switching mechanism 31 transmits both the rotation of the engine drive shaft 13 and the rotation of the motor drive shaft 14 to the upper transmission shaft 17 when the dog clutch 40 moves upward and the rotation speed of the transmission gear 45 in the above-described predetermined direction is higher than the rotation speed of the upper transmission shaft 17 in the above-described predetermined direction. As a result, the engine 6 and the motor 8 are the power sources that rotate the propellers 2 and 3. The power switching mechanism 31 transmits only the rotation of the motor drive shaft 14 to the upper transmission shaft 17 when the dog clutch 40 moves downward. As a result, the motor 8 is the only power source that rotates the propellers 2 and 3.

### Example of Boat Operation Mode and Operation of Power Switching Mechanism

Here, an example of an operation mode of the boat and an operation of the power switching mechanism 31 will be described. Before description, some preliminary facts will be described. A rotation direction of the crankshaft 7 of the engine 6 is fixed in a specific direction due to the structure of the engine 6. When the rotation of the crankshaft 7 is transmitted to the upper transmission shaft 17, the rotation direction of the upper transmission shaft 17 becomes the above-described predetermined direction. In general, a rotation direction of the output shaft 9 of the motor 8 can be easily reversed by controlling the motor 8, but in the marine propulsion device 1 of the example, the motor 8 is controlled so that the rotation direction of the output shaft 9 of the motor 8 is always constant. The rotation direction of the output shaft 9 of the motor 8 is determined so that when rotation of the output shaft 9 is transmitted to the upper transmission shaft 17, the rotation direction of the upper transmission shaft 17 becomes the above-described predetermined direction.

When the boat is operated at a low speed, the dog clutch 40 of the power switching mechanism 31 is moved downward to drive the motor 8 at a low rotation speed. As a result, only the rotation of the motor drive shaft 14 is transmitted to the upper transmission shaft 17 via the dog clutch 40. Therefore, the propellers 2 and 3 rotate only by the power of the motor 8, and the boat moves only by the power of the motor 8. Accordingly, the boat can move smoothly at a very low speed.

When the boat is operated at a constant high speed, the engine 6 is driven at a constant high rotation speed and the dog clutch 40 of the power switching mechanism 31 is moved upward to stop the motor 8. As a result, the rotation of the engine drive shaft 13 is transmitted to the upper transmission shaft 17 via the dog clutch 40. Since the rotation speed of the stopped motor 8 is zero, the rotation of the motor 8 is not transmitted to the upper transmission shaft 17 via the one-way clutch 51. Therefore, the propellers 2 and 3 rotate only by the power of the engine 6, and the boat moves only by the power of the engine 6. Accordingly, electricity consumption is reduced when the boat moves at a high speed.

When accelerating the boat to glide, the dog clutch 40 of the power switching mechanism 31 is moved upward to increase the rotation speed of the engine 6 that is being driven, and at the same time, the motor 8 is driven to increase the rotation speed of the motor 8. As a result, the rotation of the engine drive shaft 13 is transmitted to the upper transmission shaft 17 via the dog clutch 40. When the rotation speed of the transmission gear 45 becomes higher than the rotation speed of the upper transmission shaft 17 due to an increase in the rotation speed of the motor 8, the rotation of the motor drive shaft 14 is transmitted to the upper transmission shaft 17 via the one-way clutch 51. Therefore, the propellers 2 and 3 rotate by the power of both the engine 6 and the motor 8, and the boat accelerates by the power of both the engine 6 and the motor 8. Accordingly, the boat can accelerate quickly and smoothly.

### Control of Dog Clutch

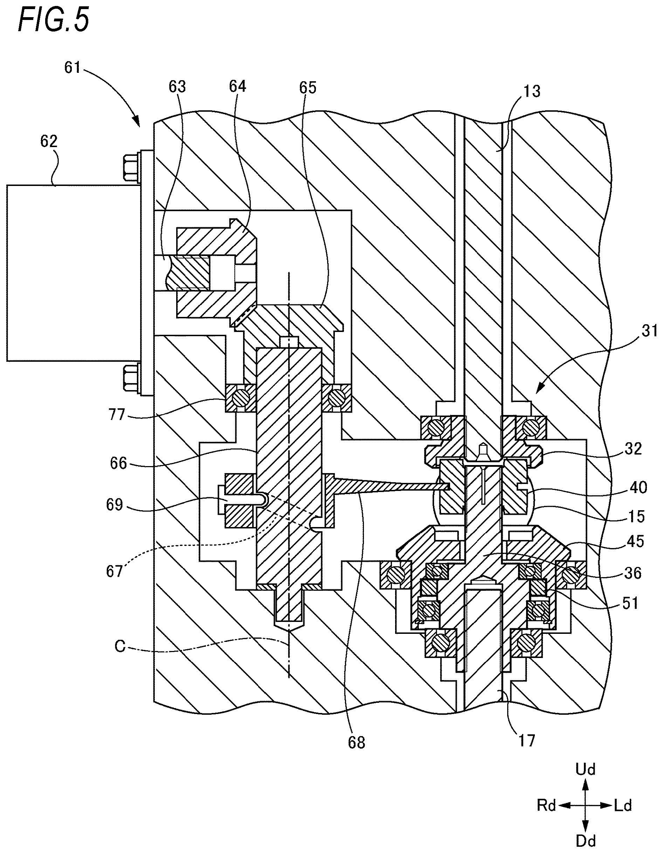

FIG. 5 illustrates a cross section of the power switching mechanism 31 taken along a direction of an arrow V-V in FIG. 2 as viewed from the front (left in FIG. 2).

As illustrated in FIG. 5, the marine propulsion device 1 includes a control device 61 that controls movement of the dog clutch 40. The control device 61 is disposed on the right of the dog clutch 40. In the example, the power switching mechanism 31 including the dog clutch 40, the engine drive shaft 13, the motor 8, the motor drive shaft 14, the transmission shaft 16, the rotation direction switching mechanism 21, the rotation transmission mechanism 26, and the propeller shafts 4 and 5 are disposed in a center of the marine propulsion device 1 in the left-right direction, while the control device 61 is disposed in a right part of the marine propulsion device 1.

The control device 61 includes an actuator 62 (for example, a small motor), two bevel gears 64 and 65, a cylindrical cam 66, and a fork 68. The actuator 62 is fixed to the body of the marine propulsion device 1. The bevel gear 64 is fixed to a rotating shaft 63 of the actuator 62, and meshes with the bevel gear 65 fixed to the cylindrical cam 66. The cylindrical cam 66 is supported by the body of the marine propulsion device 1 via a bearing 77 and the like to be rotatable about an axis C that extends in the vertical direction in FIG. 5. A base end portion of the fork 68 is attached to an outer periphery of the cylindrical cam 66. A tip end portion of the fork 68 is bifurcated and inserted into the fork mounting groove 44 of the dog clutch 40 to pinch the dog clutch 40 therebetween. A fork pin 69 is attached to the base end portion of the fork 68, and a tip end portion of the fork pin 69 is inserted into a cam groove 67 formed on an outer circumferential surface of the cylindrical cam 66.

When the actuator 62 is driven and the rotating shaft 63 rotates, the rotation is transmitted to the cylindrical cam 66 via the bevel gears 64 and 65 so that the cylindrical cam 66 rotates. As a result, the fork pin 69 inserted into the cam groove 67 is displaced upward or downward, and the fork 68 moves upward or downward accordingly. By controlling the driving of the actuator 62 to switch a rotation direction of the rotating shaft 63, a movement direction of the fork 68 can be switched. When the fork 68 moves upward, the fork 68 pushes up the dog clutch 40 so that the dog clutch 40 moves upward. When the fork 68 moves downward, the fork 68 pushes down the dog clutch 40 so that the dog clutch 40 moves downward.

As described above, the marine propulsion device 1 according to the first example of the present invention includes the engine 6 and the motor 8 as two power sources for rotating the propellers 2 and 3. The marine propulsion device 1 of the example includes the dog clutch 40 that switches the connection mode of the engine drive shaft 13, the motor drive shaft 14, and the upper transmission shaft 17 between a mode in which the engine drive shaft 13 and the upper transmission shaft 17 are connected to each other and a mode in which the motor drive shaft 14 and the upper transmission shaft 17 are connected to each other, and in the marine propulsion device 1 of the example, the power source that rotates the propellers 2 and 3 can be switched by the dog clutch 40. In the marine propulsion device including two power sources, the power source that rotates the propeller can also be switched using the centrifugal clutch. However, as the centrifugal clutch has a structure that includes weights for switching between engagement and disengagement of the clutch by centrifugal force, a size of the centrifugal clutch increases as torque capacity increases. In contrast, the dog clutch does not require such weights, and therefore, structurally, compared to the centrifugal clutch, it is easy to reduce an increase in size that accompanies an increase in torque capacity. In the marine propulsion device 1 of the example, the power source that rotates the propellers 2 and 3 is switched using the dog clutch 40 so that the structure for transmitting the power of the two power sources to the propellers 2 and 3, specifically, the structure for switching the power source that rotates the propellers 2 and 3 can be simplified and made compact.

The marine propulsion device 1 of the example includes the dog clutch 40 and the one-way clutch 51, and in the marine propulsion device 1 of the example, it is possible to combine the power of two power sources, that is, the power of the engine 6 and the power of the motor 8 and output the combined power to the propeller shafts 4 and 5 by cooperation of the dog clutch 40 and the one-way clutch 51. In the marine propulsion device including two power sources, the power of the two power sources can also be combined using the differential gear device. However, the differential gear device has a complex structure including a large number of mechanical elements (gears and the like) so that it is difficult to reduce a size of the differential gear device. In contrast, the dog clutch and the one-way clutch can each be configured of a smaller number of mechanical elements than the differential gear device so that it is easier to simplify the structure and reduce the size compared to the differential gear device. Even when the dog clutch and the one-way clutch are combined, it is easier to simplify the overall structure and reduce the size thereof compared to simplifying the structure of the differential gear device and reducing the size thereof. In the marine propulsion device 1 of the example, the power of the two power sources is combined using the dog clutch 40 and the one-way clutch 51 so that the structure for transmitting the power of the two power sources to the propellers 2 and 3, specifically, the structure for combining the power of the two power sources and outputting the combined power to the propeller shafts 4 and 5 can be simplified and made compact.

In the marine propulsion device 1 of the example, the engine drive shaft 13 and the upper transmission shaft 17 each extend in the vertical direction, the upper transmission shaft 17 is disposed below the engine drive shaft 13 coaxially with the engine drive shaft 13, the dog clutch 40 is provided in the upper part 37 of the clutch shaft 36 fixed to the upper transmission shaft 17 to not be rotatable relative to the clutch shaft 36 and to be movable in the vertical direction relative to the clutch shaft 36, the engine drive shaft 13 and the dog clutch 40 engage with each other when the dog clutch 40 moves upward so that the rotation of the engine drive shaft 13 is transmitted to the upper transmission shaft 17, and the engine drive shaft 13 and the dog clutch 40 disengage from each other when the dog clutch 40 moves downward so that the rotation of the engine drive shaft 13 is no longer transmitted to the upper transmission shaft 17. According to such configuration, the function of switching whether to transmit the power of the engine 6 to the propellers 2 and 3 can be realized with a simple and compact structure.

In the marine propulsion device 1 of the example, in addition to the above configuration, the motor drive shaft 14 extends in the front-rear direction, the transmission gear 45 is provided in the outer periphery of the clutch shaft 36 fixed to the upper transmission shaft 17 and below the dog clutch 40 to be rotatable relative to the clutch shaft 36, the motor drive gear 15 is provided in an end of the motor drive shaft 14 to not be rotatable relative to the motor drive shaft 14 and to transmit the rotation of the motor drive shaft 14 to the transmission gear 45, the transmission gear 45 and the dog clutch 40 engage with each other when the dog clutch 40 moves downward so that the rotation of the motor drive shaft 14 is transmitted to the upper transmission shaft 17, and the transmission gear 45 and the dog clutch 40 disengage from each other when the dog clutch 40 moves upward so that the rotation of the motor drive shaft 14 is no longer transmitted to the upper transmission shaft 17. With such configuration, in addition to the function of switching whether to transmit the power of the engine 6 to the propellers 2 and 3, the function of switching whether to transmit the power of the motor 8 to the propellers 2 and 3 can be realized with a simple and compact structure.

In the marine propulsion device 1 of the example, the engaging portion 48 is provided in the inner circumferential portion of the upper part of the transmission gear 45 and engages with the dog clutch 40 when the dog clutch 40 moves downward. As such, the transmission gear 45 includes the teeth portion 46 that has the function of transmitting the rotation of the motor drive gear 15 to the transmission gear 45, and the engaging portion 48 that has the function of transmitting the rotation of the transmission gear 45 to the dog clutch 40. By the transmission gear 45 having the two functions, the number of mechanical elements configuring the power switching mechanism 31 can be reduced, so that it is possible to miniaturize the power switching mechanism 31, thereby leading to miniaturization of the marine propulsion device 1.

In the marine propulsion device 1 of the example, the clutch shaft 36 extends in the vertical direction and is provided in the upper end of the upper transmission shaft 17 to be coaxial with the upper transmission shaft 17 and to not be rotatable relative to the upper transmission shaft 17, the dog clutch 40 is provided in the clutch shaft 36 to not be rotatable relative to the clutch shaft 36 and to be movable in the vertical direction relative to the clutch shaft 36, the transmission gear 45 is provided on the outer periphery side of the clutch shaft 36 and below the dog clutch 40 to be rotatable relative to the clutch shaft 36, and the one-way clutch 51 is disposed between the boss portion 50 of the transmission gear 45 and the clutch shaft 36. According to such configuration, the dog clutch 40 and the one-way clutch 51 can be disposed closer to each other so that the power switching mechanism 31 can be made compact.

In the marine propulsion device 1 of the example, the control device 61 that controls the movement of the dog clutch 40 is disposed on the right of the dog clutch 40. According to such configuration, a length of the marine propulsion device 1 in the front-rear direction can be shortened compared to the marine propulsion device 1 in which the control device 61 is disposed in front of the dog clutch 40. By not positioning the control device 61 in front of the dog clutch 40, the positions of the engine 6 and motor 8 in the marine propulsion device 1 can be moved closer to a front end side of the marine propulsion device 1 so that the center of gravity of the marine propulsion device 1 can be positioned at a front part of the marine propulsion device 1. Accordingly, it becomes easier to tilt up the marine propulsion device 1.

### [Second Example]

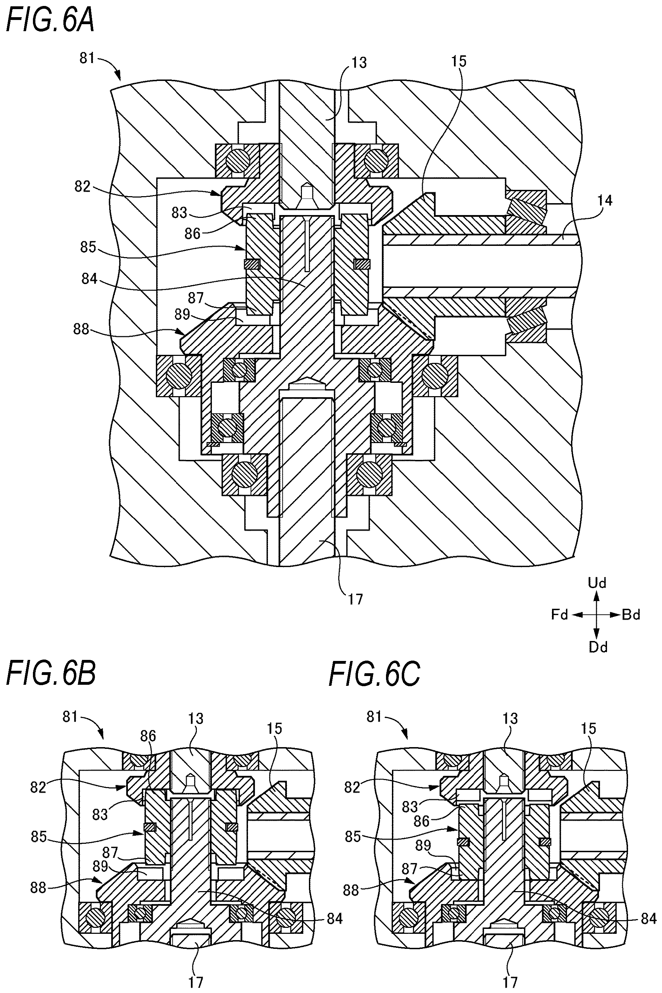

FIGS. 6A, 6B, and 6C illustrate a power switching mechanism 81 in a marine propulsion device according to a second example of the present invention. In detail, FIG. 6A illustrates a state in which a dog clutch 85 is positioned in a center in the vertical direction, FIG. 6B illustrates a state in which the dog clutch 85 moves upward, and FIG. 6C illustrates a state in which the dog clutch 85 moves downward.

The power switching mechanism 81 in the second example of the present invention is different from the power switching mechanism 31 in the first example of the present invention in that the power switching mechanism 81 has a configuration in which the dog clutch 85 switches the connection mode of the engine drive shaft 13, the motor drive shaft 14, and the upper transmission shaft 17 between a first mode in which the engine drive shaft 13 and the upper transmission shaft 17 are connected to each other, a second mode in which the motor drive shaft 14 and the upper transmission shaft 17 are connected to each other, and a third mode in which both the engine drive shaft 13 and the motor drive shaft 14 are connected to the upper transmission shaft 17. The power switching mechanism 81 in the second example of the present invention is different from the power switching mechanism 31 in the first example of the present invention in that the power switching mechanism 81 does not include the one-way clutch 51. Except for such points, the marine propulsion device of the second example of the present invention is similar to the marine propulsion device 1 of the first example of the present invention.

In the power switching mechanism 81, when the dog clutch 85 moves upward as illustrated in FIG. 6B, an upper engaging portion 86 of the dog clutch 85 and an engaging portion 83 of an engaging member 82 engage with each other. As a result, the engine drive shaft 13 and the upper transmission shaft 17 are connected to each other via the engaging member 82, the dog clutch 85, and a dog clutch shaft 84. When the dog clutch 85 moves upward, a lower engaging portion 87 of the dog clutch 85 and an engaging portion 89 of a transmission gear 88 are separated from each other. As a result, the connection between the motor drive shaft 14 and the upper transmission shaft 17 via the motor drive gear 15, the transmission gear 88, the dog clutch 85, and the dog clutch shaft 84 is released. Therefore, when the dog clutch 85 moves upward, the rotation of the engine drive shaft 13 is transmitted to the upper transmission shaft 17 via the dog clutch 85, and at the same time, the rotation of the motor drive shaft 14 is no longer transmitted to the upper transmission shaft 17 via the dog clutch 85. Therefore, the propellers 2 and 3 are rotated only by the power of the engine 6.

In the power switching mechanism 81, when the dog clutch 85 moves downward as illustrated in FIG. 6C, the upper engaging portion 86 of the dog clutch 85 and the engaging portion 83 of the engaging member 82 are separated from each other. As a result, the connection between the engine drive shaft 13 and the upper transmission shaft 17 via the engaging member 82, the dog clutch 85, and the dog clutch shaft 84 is released. When the dog clutch 85 moves downward, the lower engaging portion 87 of the dog clutch 85 and the engaging portion 89 of the transmission gear 88 engage with each other. As a result, the motor drive shaft 14 and the upper transmission shaft 17 are connected to each other via the motor drive gear 15, the transmission gear 88, the dog clutch 85, and the dog clutch shaft 84. Therefore, when the dog clutch 85 moves downward, the rotation of the engine drive shaft 13 is no longer transmitted to the upper transmission shaft 17 via the dog clutch 85, and at the same time, the rotation of the motor drive shaft 14 is transmitted to the upper transmission shaft 17 via the dog clutch 85. Therefore, the propellers 2 and 3 are rotated only by the power of the motor 8.

In the power switching mechanism 81, when the dog clutch 85 moves to a center position in the vertical direction as illustrated in FIG. 6A, the upper engaging portion 86 of the dog clutch 85 and the engaging portion 83 of the engaging member 82 engage with each other. As a result, the engine drive shaft 13 and the upper transmission shaft 17 are connected to each other via the engaging member 82, the dog clutch 85, and a dog clutch shaft 84. When the dog clutch 85 moves to the center position in the vertical direction, the lower engaging portion 87 of the dog clutch 85 and the engaging portion 89 of the transmission gear 88 engage with each other. As a result, the motor drive shaft 14 and the upper transmission shaft 17 are connected to each other via the motor drive gear 15, the transmission gear 88, the dog clutch 85, and the dog clutch shaft 84. Therefore, when the dog clutch 85 moves to the center position in the vertical direction, both the rotation of the engine drive shaft 13 and the rotation of the motor 8 are transmitted to the upper transmission shaft 17 via the dog clutch 85. Therefore, the propellers 2 and 3 are rotated by the power of the engine 6 and the power of the motor 8.

As described above, the marine propulsion device according to the second example of the present invention has a configuration in which the dog clutch 85 is used to switch the power sources that rotate the propellers 2 and 3 and to combine the power of the two power sources. Therefore, according to the marine propulsion device of the second example of the present invention, the structure for transmitting the power of the two power sources to the propellers 2 and 3 can be simplified and made compact.

In the above-described second example, an example is given in which the dog clutch 85 switches the connection mode of the engine drive shaft 13, the motor drive shaft 14, and the upper transmission shaft 17 between the first mode, the second mode, and the third mode, but the present invention is not limited thereto. The dog clutch 85 may switch the connection mode of the engine drive shaft 13, the motor drive shaft 14, and the upper transmission shaft 17 only between the first mode and the second mode, only between the first mode and the third mode, or only between the second mode and the third mode.

In each of the above-described examples, the first power source is the engine 6 and the second power source is the motor 8, but the present invention is not limited thereto. The first power source may be a motor and the second power source may be an engine, or the first power source may be a motor and the second power source may be another motor.

In each of the above-described examples, the second power source (motor 8) is disposed on the lower rear of the first power source (engine 6) so that the extension direction of the output shaft 9 is the front-rear direction. The second drive shaft (motor drive shaft 14) connected to the second power source extends in the front-rear direction. However, the present invention is not limited thereto. The second power source (motor 8) may be disposed on the lower left or lower right of the first power source (engine 6) so that the extension direction of the output shaft 9 is the left-right direction, and the extension direction of the second drive shaft may be the left-right direction. The second power source (motor 8) may be disposed on the lower front of the first power source (engine 6) so that the extension direction of the output shaft 9 is the front-rear direction, and the extension direction of the second drive shaft may be the front-rear direction.

In each of the above examples, an example is given in which the clutch shaft 36 is provided in the upper end of the upper transmission shaft 17 and the dog clutch 40 is attached to the clutch shaft 36, but the present invention is not limited thereto. A configuration in which the clutch shaft 36 is not provided and the dog clutch 40 is directly attached to the upper end of the upper transmission shaft 17 is also possible.

In each of the above-described examples, the control device 61 that controls the movement of the dog clutch 40 (85) is disposed on the right of the dog clutch 40 (85), but the present invention is not limited thereto. For example, the control device 61 may be disposed on the left of the dog clutch 40 (85).

Although the marine propulsion devices in the above-described examples employ contra-rotating propellers, the present invention can also be applied to marine propulsion devices that do not employ contra-rotating propellers. Although the marine propulsion devices in the above-described examples are outboard motors, the present invention can also be applied to other types of marine propulsion devices that are not outboard motors.

The present invention can be modified as appropriate without departing from the spirit or the concept of the invention as can be read from the claims and the entire specification, and marine propulsion devices incorporating such modifications are also included in the technical concept of the present invention.

### REFERENCE SIGNS LIST

1: marine propulsion device
2, 3: propeller
4, 5: propeller shaft
6: engine (first power source)
8: motor (second power source)
13: engine drive shaft (first drive shaft)
14: motor drive shaft (second drive shaft)
15: motor drive gear (second gear)
16: transmission shaft
31, 81: power switching mechanism
36, 84: clutch shaft
40, 85: dog clutch
45, 88: transmission gear (first gear)
48, 89: engaging portion
50: boss portion (boss)
51: one-way clutch
61: control device

## Claims

1. A marine propulsion device (1) comprising:
a propeller (2, 3);
a first power source (6) for rotating the propeller;
a second power source (8) for rotating the propeller;
a propeller shaft (4, 5) provided with the propeller;
a first drive shaft (13) connected to the first power source;
a second drive shaft (14) connected to the second power source;
a transmission shaft (16) connected to the propeller shaft; and
a dog clutch (40, 85) that switches a connection mode of the first drive shaft, the second drive shaft, and the transmission shaft between at least two of: a first mode in which the first drive shaft and the transmission shaft are connected to each other; a second mode in which the second drive shaft and the transmission shaft are connected to each other; and a third mode in which both the first drive shaft and the second drive shaft are connected to the transmission shaft.

2. The marine propulsion device according to claim 1, wherein
the first drive shaft and the transmission shaft each extend in a vertical direction and the transmission shaft is disposed below the first drive shaft coaxially with the first drive shaft,
the dog clutch is provided in an upper end of the transmission shaft to not be rotatable relative to the transmission shaft and to be movable in the vertical direction relative to the transmission shaft, and
the first drive shaft and the dog clutch engage with each other when the dog clutch moves upward so that rotation of the first drive shaft is transmitted to the transmission shaft, and the first drive shaft and the dog clutch disengage from each other when the dog clutch moves downward so that the rotation of the first drive shaft is no longer transmitted to the transmission shaft.

3. The marine propulsion device according to claim 2, further comprising:
a first gear and a second gear, wherein
the second drive shaft extends in a direction perpendicular to the vertical direction,
the first gear is provided on an outer circumferential side of the transmission shaft and below the dog clutch to be rotatable relative to the transmission shaft,
the second gear is provided in an end of the second drive shaft to not be rotatable relative to the second drive shaft and to transmit rotation of the second drive shaft to the first gear, and
the first gear and the dog clutch engage with each other when the dog clutch moves downward so that the rotation of the second drive shaft is transmitted to the transmission shaft, and the first gear and the dog clutch disengage from each other when the dog clutch moves upward so that the rotation of the second drive shaft is no longer transmitted to the transmission shaft.

4. The marine propulsion device according to claim 3, further comprising:
a one-way clutch, wherein
the one-way clutch is provided between the first gear and the transmission shaft,
the dog clutch switches a connection mode of the first drive shaft, the second drive shaft, and the transmission shaft between the first mode and the second mode, and
when the dog clutch moves upward to separate the first gear and the dog clutch from each other and a rotation speed of the first gear in a predetermined direction is higher than a rotation speed of the transmission shaft in the predetermined direction, the rotation of the second drive shaft is transmitted to the transmission shaft by the one-way clutch.

5. The marine propulsion device according to claim 3, wherein an engaging portion is provided in an inner circumferential portion of an upper part of the first gear and engages with the dog clutch when the dog clutch moves downward.

6. The marine propulsion device according to claim 4, further comprising:
a clutch shaft, wherein
the clutch shaft extends in the vertical direction and is provided in an upper end of the transmission shaft to be coaxial with the transmission shaft and to not be rotatable relative to the transmission shaft,
the dog clutch is provided in the clutch shaft to not be rotatable relative to the clutch shaft and to be movable in the vertical direction relative to the clutch shaft,
the first gear is provided on an outer circumferential side of the clutch shaft and below the dog clutch to be rotatable relative to the clutch shaft, and
the one-way clutch is disposed between a boss of the first gear and the clutch shaft.

7. The marine propulsion device according to claim 3, further comprising:
a control device that controls movement of the dog clutch, wherein
the second drive shaft extends in a front-rear direction, and
the control device is disposed on a left side or a right side of the dog clutch.
